(19) Europäisches Patentamt
European Patent Office
Office européen des brevets

(11) **EP 4 718 049 A1**

(12) **EUROPEAN PATENT APPLICATION**

(43) Date of publication:
01.04.2026 Bulletin 2026/14

(21) Application number: 25204077.9

(22) Date of filing: 23.09.2025

(51) International Patent Classification (IPC):
*G01M 11/00* $^{(2006.01)}$

(52) Cooperative Patent Classification (CPC):
**G01M 11/3109; H04B 10/071;** G02B 6/02328

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 26.09.2024 US 202463699347 P
13.01.2025 US 202563744498 P

(71) Applicant: **EXFO Inc.**
**Québec, QC G1M 2K2 (CA)**

(72) Inventors:
• **LECLERC, Michel**
**Québec, G1M 2K2 (CA)**
• **FAUCHER, Nicolas**
**Québec, G1M 2K2 (CA)**

(74) Representative: **Gregory, Alexandra Louise et al**
**Venner Shipley LLP**
**5 Stirling House**
**Surrey Research Park**
**Stirling Road**
**Guildford GU2 7XH (GB)**

(54) **OTDR METHOD FOR DETECTING HOLLOW-CORE FIBERS**

(57) A method of locating a hollow-core fiber segment amongst silica core segments in optical fiber link is provided. An OTDR test instrument sends test signals along the fiber link and a Rayleigh backscatter level as a function of distance along the optical fiber link of returning signals is measured. The position of the proximal extremity of the hollow-core optical fiber segment is identified by locating a discrete drop greater than a drop threshold value in the Rayleigh backscatter level. The position of the distal extremity of the hollow-core fiber segment is identified by locating one of a discrete step greater than a step threshold value in the Rayleigh backscatter level and end-of-fiber indicator. The drop threshold value and the step threshold value are commensurate with a difference between a Rayleigh backscatter level in hollow-core optical fibers and in the type of silica core optical fibers of the optical fiber link.

FIG. 2

EP 4 718 049 A1

**Description**

**TECHNICAL FIELD**

The present description generally relates to Optical Time-Domain Reflectometry (OTDR), and more particularly to detecting hollow-core optical fibers using an Optical Time-Domain Reflectometer.

**BACKGROUND**

Optical Time-Domain Reflectometry (OTDR - the acronym being also used to refer to the corresponding device) is widely employed for characterization of optical fiber links. OTDR is a diagnostic technique where light pulses are launched in an optical fiber link and returning light, arising from backscattering and reflections along the fiber link, is detected and analyzed. Various components and fiber sections along the fiber link can be detected and characterized through a proper analysis of the returning light in the time domain and insertion loss of the fiber link under test, as well as each component and fiber sections along the link, can be characterized in terms of insertion loss, reflectance and distance along the link.

Traditionally, the optical fiber links used in telecommunication and characterized using OTDRs are mostly made of silica core fibers, which encompass single-mode fibers (SMF), such as SMF-28, and multimode fibers, such as OM2, OM3 or OM4. The use of Hollow-Core Fibers (HCFs) is however becoming more common in data transmission links, particularly in cases where a very low latency is key. HCFs may also have some benefits in achieving higher data rates.

OTDR measurements on optical fiber links involving HCFs present some challenges. Rayleigh backscattering in HCFs is at least 30 dB lower than in more common silica core fibers. It follows that the level of Rayleigh backscattering along HCF sections may fall below the dynamic range of traditional OTDR test instruments and become hidden behind optical noise.

HCFs also have a lower index of refraction than traditional single-mode fiber. The index of refraction of HCF is close to 1 at 1550 nm, whereas it is 1.468 in glass. The index of refraction is used by OTDRs in order to convert the time of flight within the optical fiber link into distance. For optical fiber links where there is a mixed of HCFs and silica core fibers, a traditional OTDR test instruments will not account for any change in index of refraction and distances along the link may be improperly assessed.

There remains a need to identify the presence and position of HCF sections in an OTDR measurement performed on an optical fiber link comprising HCF sections.

**SUMMARY**

In some implementations, there is provided an OTDR method which allows to identify sections of hollow-core optical fiber within an OTDR trace.

In some implementations, once hollow-core optical fiber sections are identified, the proper index of refraction may be selected for each section of optical fibers along the link under test and correct distances and range along the link may be determined and displayed.

In accordance with one aspect, there is provided a method of locating a hollow-core fiber segment amongst silica core segments along an optical fiber link, comprising:

- using an OTDR test instrument, sending test signals along the optical fiber link and receiving returning signals therefrom;
- measuring from said returning signals a Rayleigh backscatter level as a function of distance along the optical fiber link;
- identifying a position of a proximal extremity of the hollow-core optical fiber segment, comprising locating a discrete drop greater than a drop threshold value in the Rayleigh backscatter level; and
- identifying a position of a distal extremity of the hollow-core fiber segment, comprising locating one of a discrete step greater than a step threshold value in the Rayleigh backscatter level and end-of-fiber indicator;

wherein the drop threshold value and the step threshold value are commensurate with a difference between a Rayleigh backscatter level in hollow-core optical fibers and a Rayleigh backscatter level in silica core optical fibers of the type of the silica core fiber segment immediately preceding and immediately following the hollow-core fiber segment, respectively.

In some implementations, the method further comprises determining if the Rayleigh backscatter level between the proximal and distal extremities of the hollow-core fiber segment is measurable. The method may further comprise, if said determining is positive, characterizing one or more event in the hollow-core fiber segment using the OTDR test instrument.

In some implementations, the method further comprises measuring a Rayleigh backscatter coefficient of the hollow-core fiber segment, comprising performing a bi-directional OTDR measurement.

In some implementations, the method further comprises re-scaling the Rayleigh backscatter level as a function of distance associated with the hollow-core fiber segment.

In some implementations, the method further comprises:

- assigning an HCF index of refraction value to the hollow-core fiber segment; and

- adjusting a distance scale associated with the hollow-core fiber segment based on said HCF index of refraction value.

In some implementations, the method comprises building an OTDR trace of the optical fiber link using the adjusted distance scale associated with the hollow-core fiber segment.

In some implementations, the method further comprises locating one or more additional hollow-core optical segments along the optical fiber link. In some variants, locating one or more additional hollow-core optical segment comprises, for each of said additional hollow-core optical segments:

- identifying a position of a proximal extremity of the corresponding additional hollow-core optical fiber segment, comprising locating a discrete drop greater than a corresponding drop threshold value in the Rayleigh backscatter level; and
- identifying a position of a distal extremity of the corresponding additional hollow-core fiber segment, comprising locating one of a discrete step greater than a corresponding step threshold value in the Rayleigh backscatter level and end-of-fiber indicator.

Other features and advantages will be better understood upon of reading of detailed embodiments with reference to the appended drawings.

**BRIEF DESCRIPTION OF THE DRAWINGS**

FIG. 1 is a schematized representation of an optical fiber link having both silica core and hollow-core optical fiber segments.

FIG. 2 is a flow chart of a method according to one implementation.

FIG. 3 is an example of an OTDR trace which would be obtained from an OTDR acquisition on the optical fiber link of FIG. 1.

FIG. 4, there is shown a table providing examples of expected cases for hollow-core fiber event localization depending on whether the Rayleigh backscatter is measurable and on the presence of a silica core fiber at the distal extremity of the hollow-core fiber segment.

FIG. 5 is an example of results displayed by an OTDR instrument in a case where there is a single-mode fiber Launch and Receive without measurable hollow-core optical fiber Rayleigh backscatter level.

FIGs. 6A and 6B respectively show examples of an OTDR trace with and without a scaling adjustment.

FIGs. 7A and 7B show an example of a graphical user interface.

**DETAILED DESCRIPTION**

Various representative implementations of the described technology will be described more fully hereinafter with reference to the accompanying drawings, in which representative implementations are shown. The present technology concept may, however, be implemented in many different forms and should not be construed as limited to the representative implementations set forth herein. Rather, these representative implementations are provided so that the disclosure will be thorough and complete, and will fully convey the scope of the present technology to those skilled in the art. In the drawings, the sizes and relative sizes of layers and regions may be exaggerated for clarity. Like numerals refer to like elements throughout.

To provide a more concise description, some of the quantitative expressions given herein may be qualified with the term "about". It is understood that whether the term "about" is used explicitly or not, every quantity given herein is meant to refer to an actual given value, and it is also meant to refer to the approximation to such given value that would reasonably be inferred based on the ordinary skill in the art, including approximations due to the experimental and/or measurement conditions for such given value.

In the present description, the term "about" means within an acceptable error range for the particular value as determined by one of ordinary skill in the art, which will depend in part on how the value is measured or determined, i.e. the limitations of the measurement system. It is commonly accepted that a 10% precision measure is acceptable and encompasses the term "about".

It will be understood that, although the terms first, second, third, etc. may be used herein to describe various elements, these elements should not be limited by these terms. These terms are used to distinguish one element from another, without necessarily imparting a preferred order or sequence to these elements. Thus, a first element discussed below could be termed a second element without departing from the teachings of the present technology. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is only intended to describe particular representative implementations and is not intended to be limiting of the present technology. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagram herein represents conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labelled as a "controller", "processor" or "processing unit", may be provided through the use of dedicated hardware as well as hardware capable of executing software in association with appropriate software and according to the methods described herein. When provided by a processor, the functions may be provided by a single dedicated processor, by a single shared processor, or by a plurality of individual processors, some of which may be shared. In some implementations of the present technology, the processor may be a general purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules or units which are implied to be software, may be represented herein as any combination of flowchart elements or other elements indicating performance of process steps and/or textual description. Such modules may be executed by hardware that is expressly or implicitly shown, the hardware being adapted to (made to, designed to, or configured to) execute the modules. Moreover, it should be understood that module may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present disclosure.

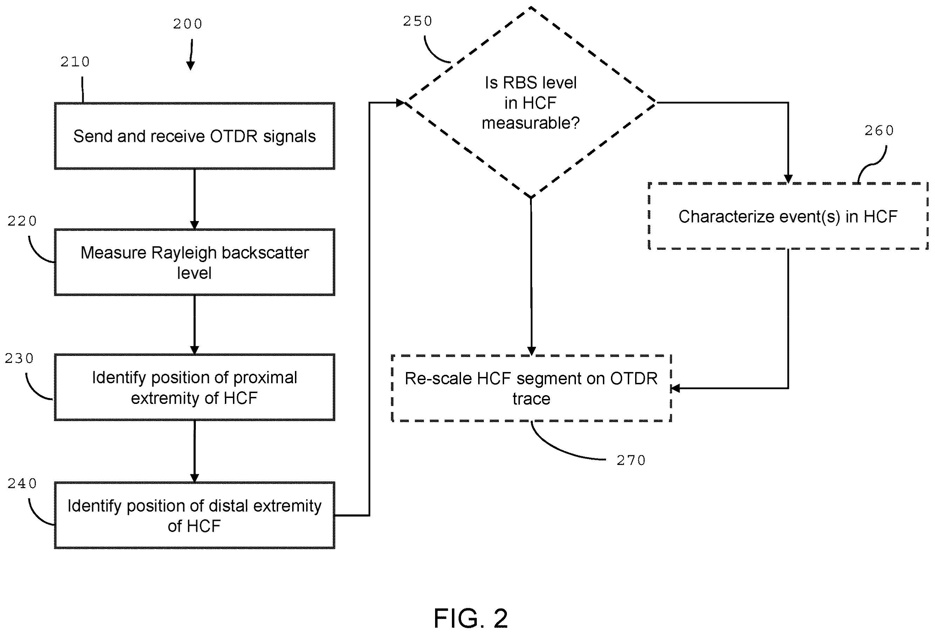

In accordance with some aspects, there is provided a method 200 of locating a hollow-core fiber segment amongst silica core fiber segments along an optical fiber link. A Flow chart of the method according to some implementations is shown in FIG. 2.

As know in the art, typical optical fiber links carrying light signals in optical telecommunication networks are mostly made of one or more segments of silica core fibers. The expression "silica core fiber" as used here in is meant to encompass any optical fiber having a silica core, including both single-mode fibers (SMF), such as SMF-28, and multimode fibers, such as OM2, OM3 or OM4. **In** some instances, optical fiber links include one or more segments of hollow-core optical fiber(s) mixed with one or more silica core optical fiber segments.

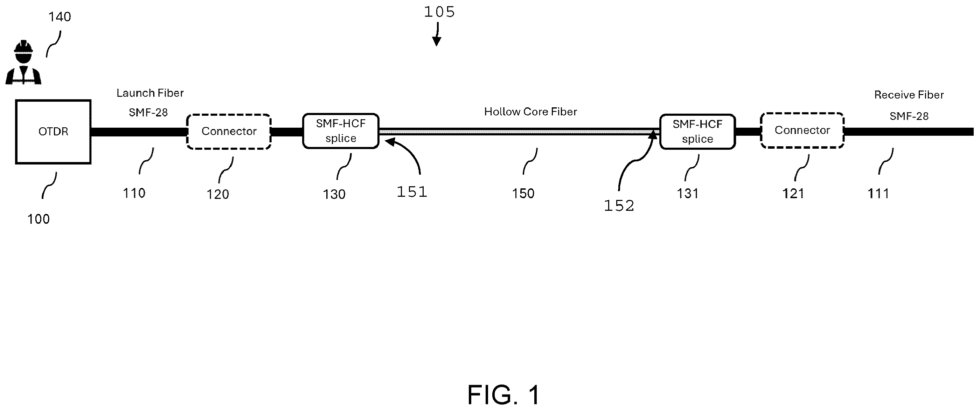

Referring to FIG. 1, there is shown an example of an optical fiber link 105 having both silica core and hollow-core optical fiber segments. In the illustrated example, the optical fiber link 105 includes, sequentially, a launch fiber segment 110 made of silica core optical fiber, for example SMF-28, a hollow-core fiber segment 150, and a receive fiber segment 111 made of silica core optical fiber, for example SMF-28. A first splice 130 connects the launch fiber segment 110 and the hollow-core fiber segment 150, and a second splice 131 connects the hollow-core fiber segment 150 to the receive fiber segment 111. Optionally, in some embodiments, an optical fiber connector 120, 121 may be provided to connect the hollow-core fiber segment 150 and the launch fiber segment 110 or receive fiber segment 111 instead of a fiber splice. The use of a connector may not be necessary if the segment of single-mode fiber leading up to the hollow-core optical fiber, for example the receive fiber segment 111, is long enough to enable reflectometric measurements. Any number of other optical components such as connectors, splices and fiber sections may be provided along the optical fiber link 105 without departing from the scope of protection.

It will be readily understood that the present method may be used with optical fiber links having any numbers of silica core fiber segments and hollow-core fiber segments. In the simplest case, the optical fiber link may have only a launch fiber segment made of silica core fiber coupled to a single hollow-core fiber segment. **In** more complex embodiments, multiple hollow-core fiber segments may be interspersed with any number of silica core fiber segments.

In some implementations, the method described herein is based on an analysis of the Rayleigh backscatter level measurement as a function of distance to find locations showing a discrete drop or a discrete step in the Rayleigh backscatter level, wherein a discrete drop of the Rayleigh backscatter level is likely to indicate an single-mode fiber to hollow-core optical fiber transition and a discrete step of the Rayleigh backscatter level is likely to indicate an hollow-core optical fiber to single-mode fiber transition.

In some embodiments, the OTDR test instrument may further have the capability to measure the very low Rayleigh backscatter level values of hollow-core optical fibers. It will however be understood that the OTDR instrument may not have the dynamic range to obtain such information in the test conditions, and that the present method may be used even if the Rayleigh backscatter level of the hollow-core fiber segment cannot be measured.

The method described here involves the use of an OTDR test instrument, also referred to herein as an OTDR acquisition device.

Optical Time-Domain Reflectometry (OTDR - also used to refer to the corresponding device) is widely employed for characterization of optical fiber links. OTDR is a diagnostic technique where a test light signal in the form of light pulses is launched in the optical fiber link under test and the return light signal, arising from backscattering and reflections along the link, is detected and analyzed. The acquired power level of the return light signal as a function of time is referred to as an "OTDR trace" or a "reflectometric trace", where the time scale is representative of distance between the OTDR acquisition device and a point along the fiber link. Herein, the process of launching a test light signal and acquiring the return light signal to obtain therefrom an OTDR trace may be referred to as an "OTDR acquisition".

In the following description, techniques that are generally known to the ones skilled in the art of OTDR measurement and OTDR trace processing and analysis will not be explained or detailed and in this respect, the reader is referred to available literature in the art. Such techniques that are considered to be known may include, e.g., signal processing methods for identifying and characterizing events from an OTDR trace. Similarly, an OTDR acquisition device is understood to comprise conventional optical hardware and electronics as known in the art for performing OTDR acquisitions on an optical fiber link.

Each OTDR acquisition is understood to refer to the actions of propagating a test light signal comprising one or more test light pulses having the same pulse width in the optical fiber link, and detecting a corresponding return light signal from the optical fiber link as a function of time. A test light signal travelling along the optical fiber link will return towards its point of origin either through (distributed) backscattering or (localized) reflections. As mentioned above, the acquired power level of the return light signal as a function of time is referred to as the OTDR trace, where the time scale is representative of distance between the OTDR acquisition device and a point along the optical fiber link. Light acquisitions may be repeated with varied pulse width values to produce a separate OTDR trace for each test pulse width.

One skilled in the art will readily understand that in the context of OTDR methods and systems, each light acquisition generally involves propagating a large number of substantially identical light pulses in the optical fiber link and averaging the results. In this case, the result obtained from averaging may be referred to herein as the OTDR trace. It will also be understood that other factors may be controlled during the light acquisitions or from one light acquisition to the next, such as gain settings, pulse power, etc. as is well known to those skilled in the art.

In the context of the present description, the expression "backscattering" is understood to refer to Rayleigh scattering occurring from the interaction of the travelling light of the test light signal with the optical fiber media all along the fiber link, resulting in a generally sloped background light (in logarithmic units, i.e. dB, on the ordinate) on the OTDR trace, whose intensity disappears at the end of the range of the travelling pulse. "Events" along the fiber will generally result in a more localized drop of the backscattered light on the OTDR trace, which is attributable to a localized loss, and/or in a localized reflection peak. It will be understood that an "event" characterized by the OTDR method described herein may be generated by any perturbation along the fiber link which affects the returning light. Typically, an event may be generated by an optical fiber splice along the fiber link, which is characterized by a localized loss with little or no reflection. Mating connectors can also generate events that typically present reflectance, although these may be impossible to detect in some instances. OTDR methods and systems may also provide for the identification of events such as a fiber breakage, characterized by substantial localized loss and, frequently, a concomitant reflection peak, as well as loss resulting from a bend in the fiber. Finally, any other component along the fiber link may also be manifest as an "event" generating localized loss.

OTDR technology can be implemented in different manners and advanced OTDR technology typically involves multi-pulse acquisitions and analysis whereby the OTDR acquisition device makes use of multiple acquisitions performed with different pulse widths in order to provide different spatial resolutions and noise level conditions for event detection and measurement along the optical fiber link under test and provide a complete mapping of the optical fiber link. As such, an OTDR measurement may comprise multiple OTDR acquisitions performed with different pulse widths or other varying conditions. One or more OTDR traces acquired for a given OTDR measurement may be saved as part of an OTDR measurement data file or files.

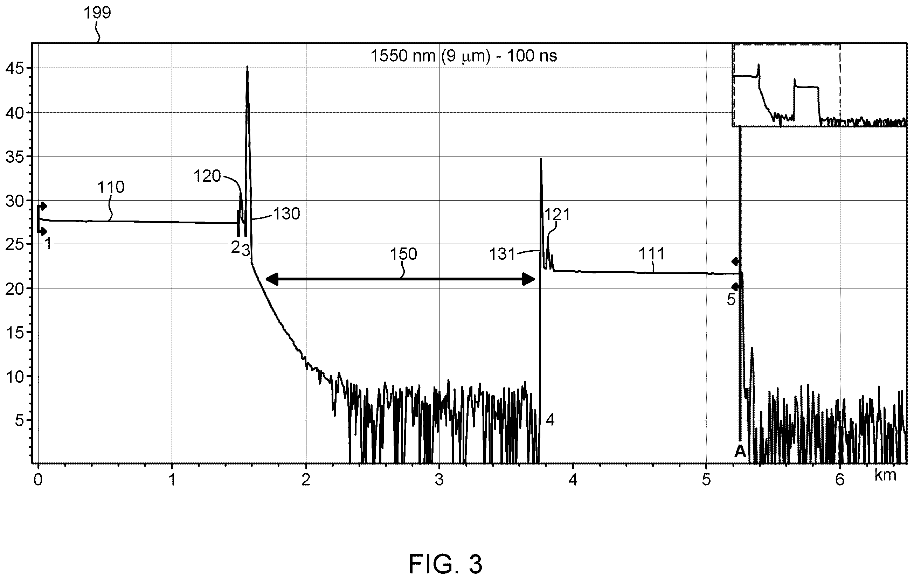

Referring to FIG. 3, there is shown an example of an OTDR trace 199 which would be obtained from an OTDR acquisition on the optical fiber link 105 of FIG. 1. The elements of the optical fiber link as previously described can be distinguished in the OTDR trace 199 of FIG. 3. The same reference numeral are used in FIG. 1 to represent the position of each element of FIG. 3. One can see the middle hollow-core optical fiber section 150 between launch 110 and receive 111 single-mode fiber 28 fibers. On OTDR traces acquired over optical fiber links comprising hollow-core optical fibers, the key difference between sections of hollow-core optical fibers and sections of silica core fibers is the Rayleigh backscatter level generated by each section, as can be seen from a comparison of the Rayleigh backscatter level along hollow-core segment 150 with the Rayleigh backscatter level along launch optical fiber 110 and receiving optical fiber 111.

One of the drawbacks of traditional OTDR test instruments used in the field is that their dynamic range is often not large enough to detect the Rayleigh backscatter levels associated with sections of hollow-core optical fibers. In accordance with some implementations, the identifications method described herein can enable the use of a traditional OTDR test instrument to characterize optical fiber links which include hollow-core optical fiber segments. In order to obtain correct measurements, the OTDR trace may be trimmed and the optical fiber sections assessed separately once the type of optical fiber in each section has been properly identified. Silica core fiber segments may then be assessed using known OTDR approaches. For example, assuming that, for OTDR testing, the optical fiber link under test is connected between single-mode launch and receive silica core fibers, the Rayleigh backscatter level associated with these sections of optical fiber can be used to measure the overall link loss.

Referring back to both FIGs. 1 and 2, the method 200 first includes a step 210 of sending test light signals 101 along the optical fiber link 105 and receiving return light signals 102 from the optical fiber link 105, using an OTDR test instrument 100. The OTDR instrument can be of any type measuring the Rayleigh backscatter level as a function of distance, including, for example and non-limitatively, regular OTDRs, Photon counting OTDR, OFDR and the like. The method next includes measuring 220, from the return light signals 102, a Rayleigh backscatter level as a function of distance along the optical fiber link 105. This may for example be accomplished in practice by setting the OTDR test instrument in in "hollow-core optical fiber Mode" programmed to perform the acquisition, and, from the OTDR acquisition, computing, calculating or otherwise obtaining an initial OTDR trace representing Rayleigh backscatter level and reflections as a function of distance along the optical fiber link, such as the one shown in FIG. 3. It will be readily understood that the proposed method may also be applied in the context of multipulse OTDR measurements where OTDR acquisitions are performed with varied pulse widths.

The method next includes identifying 230 a position of a proximal extremity 151 of the hollow-core optical fiber segment 152. This step involves locating a discrete drop in the Rayleigh backscatter level, this discrete drop being greater than a drop threshold value.

The position of this discrete drop is identified as the proximal extremity 151 of the hollow-core optical fiber segment 150.

The drop threshold value is typically commensurate with the typical difference between the Rayleigh backscatter level in a silica core optical fibers of the type of the silica core fiber segment immediately preceding the hollow-core fiber segment, and the Rayleigh backscatter level in hollow-core optical fibers. By way of example, for a transition between SMF28 fiber and typical hollow-core fibers, the drop threshold value may be of the order of about 5 dB. Hence, only a drop of more than 5 db in the OTDR trace will be tagged as the onset of a hollow-core fiber segment, smaller drops being typically associated with events of different types.

The method 200 next includes a step 240 of identifying a position of a distal extremity 152 of the hollow-core fiber segment 150. This step involves locating, along the portion of the optical fiber link following the proximal extremity 151 of the hollow-core optical fiber 150, one of two things: either a discrete step greater than a step threshold value in the Rayleigh backscatter level, or an end-of-fiber indicator.

In cases where the distal extremity 152 of the hollow-core fiber segment 150 is connected to a silica core optical fiber segment, the OTDR trace will show a step increase in the Rayleigh backscattering level above a step threshold value. The step threshold value is commensurate with a difference between a Rayleigh backscatter level in hollow-core optical fibers and a Rayleigh backscatter level in silica core optical fibers of the type of the silica core fiber segment immediately following the hollow-core fiber segment. By way of example, for a transition between a typical hollow-core fiber and a SMF28 fiber, the step threshold value may be of the order of about 5 dB.

In cases where the distal extremity 152 of the hollow-core fiber segment 150 correspond to the end of the optical fiber link 105, the OTDR trace will show a discrete drop in the Rayleigh backscatter level to a level that is out of the dynamic range, interpreted as the end-of-fiber indicator, as know in the art.

The drop threshold value and the step threshold value may be set according to known typical Rayleigh backscatter levels on optical fibers of the types expected in the optical fiber link under test. As will be understood by one skilled in the art, the difference in Rayleigh backscatter levels between silica core fibers and hollow-core fibers is typically greater than the typical variations in Rayleigh backscatter levels associated with other events on OTDR traces, such as an optical fiber splice, a mating connector, a bend in the fiber, or a fiber breakage. The drop threshold value and the step threshold value may therefore be selected to by higher than such typical variations in Rayleigh backscatter levels, and high enough to be likely to be associated with a transition with a hollow-core optical fiber. By way of example, the Rayleigh Backscatter level (RBS) of SMF optical fibers is typically of the order of -82 dB / ns at 1550 nm (see for example specifications for Corning SMF-28 (trademark) ULL optical fiber). Events SMF fibers such as an optical fiber splice, a mating connector, a bend in the fiber, or a fiber breakage typically result in a drop in RBS of the order of less than 3 dB, otherwise the fiber would be cut. By contrast, the RBS associated with hollow core fibers as been measured to almost 30 dB lower than in SMF fibers (see Wei, Xuhao et al, "Extraction of Attenuation and Backscattering Coefficient along Hollow Core Fiber Length using Two-Way Optical Time Domain Backscattering", 10.1364/opticaopen.25459957.v1, March 2024). In some variants, the drop and step threshold values between theses two types of fiber may be set to any value high enough above about 3 dB to avoid confusion with other events, and low enough below 30 dB to ensure detection of the transition. In some variants the drop threshold value and/or the step threshold value may be set to a value between about 5 dB and about 20 dB.

In embodiments where the hollow-core fiber segment is connected on both of its extremities 151 and 152 to silica core fibers of the same type, then the drop threshold value and the step threshold value may be the same or similar. In embodiments where the respective extremities 151 and 152 of the hollow-core optical fiber 150 are connected to silica core fibers of different types, then the drop threshold value and the step threshold value may differ and be selected in view of the type of silica core fiber to which the corresponding extremity of the hollow-core fiber segment is connected.

In some implementations, the method may involve locating one or more additional hollow-core optical segments along the optical fiber link, in which case the steps of identifying positions for a first and a distal extremity of each additional hollow-core fiber segments may be performed similarly to described above. Hence, in some embodiments, locating one or more additional hollow-core optical segment comprises, for each of these additional hollow-core optical segments:

- identifying a position of a proximal extremity of the corresponding additional hollow-core optical fiber segment, comprising locating a discrete drop greater than a corresponding drop threshold value in the Rayleigh backscatter level; and
- identifying a position of a distal extremity of the corresponding additional hollow-core fiber segment, comprising locating one of a discrete step greater than a corresponding step threshold value in the Rayleigh backscatter level and end-of-fiber indicator.

In implementations wherein it is unlikely that more than one hollow-core optical fiber segment is interspersed with silica core fiber segments of a same optical fiber link, the step of locating one or more additional hollow-core optical segments may be omitted.

In some implementations, referring still to the flowchart of FIG. 2, the method 200 may further include determining 250 if the Rayleigh backscatter level between the proximal and distal extremities of the hollow-core fiber segment is measurable. This may for example involve verifying if the Rayleigh backscatter level of the detected hollow-core fiber segment is long enough after the ADZ (Attenuation Dead Zone), and then verify if the Rayleigh backscatter level after the ADZ is clearly above the noise level (Ex. More than 3 dB). If this determination is positive, the method may then involve characterizing 260 one or more event in the hollow-core fiber segment using the OTDR test instrument.

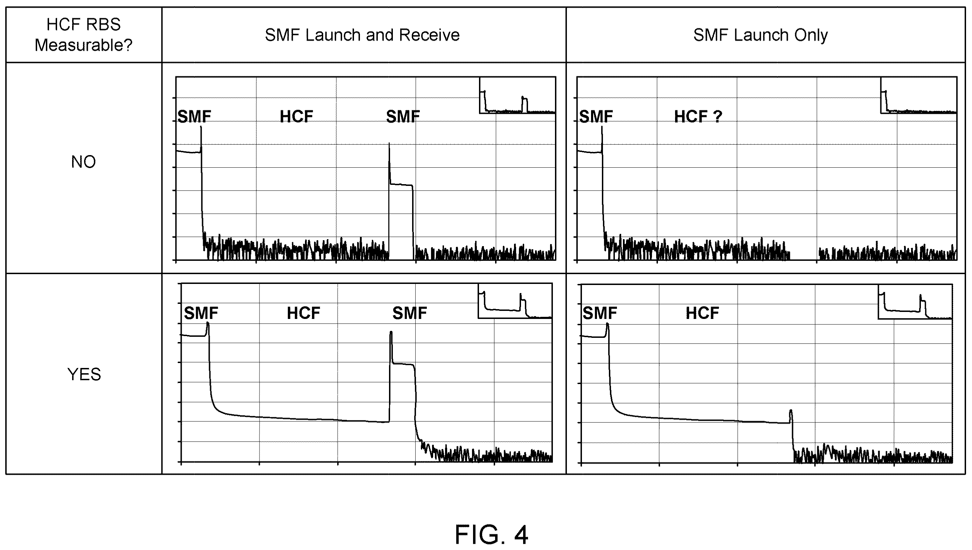

For proper hollow-core optical fiber event characterization, the launch and receive configuration of the optical fiber link should be known or determined prior to verifying if the hollow-core optical fiber Rayleigh backscatter level section is measurable. Referring to FIG. 4, there is shown a table providing an example of each of expected cases.

In the left side examples of the table, the hollow-core optical fiber is provided between a SMF launch fiber and a SMF receive fiber. The upper left OTDR trace corresponds to a case in which the Rayleigh backscatter level in the hollow-core fiber segment is below noise level, limiting the ability of the OTDR instrument to provide characterisation of event along the hollow-core fiber. In this instance, only the total loss between the proximal extremity and distal extremity of the hollow-core fiber can be measured, and an approximation of the Section Attenuation may possibly be provided. By contrast, the lower left OTDR trace correspond to a case in which the Rayleigh backscatter level in the hollow-core fiber segment is above noise level. In this instance, the OTDR instrument may be used to characterize one or more events in the hollow-core fiber segment, such as excess loss, section loss and attenuation or gainer. If the user provides Rayleigh backscatter values for the SMF and hollow-core fibers of the optical fiber link, losses at the proximal and distal connectors of the hollow-core fiber can be estimated.

In the right-side examples of the table, the hollow-core optical fiber is only connected to a launch SMF fiber, that is, the distal extremity of the hollow-core fiber corresponds to the end of the optical fiber link. The upper right OTDR trace corresponds to a case in which the Rayleigh backscatter level in the hollow-core fiber segment is below noise level, in which case the hollow-core fiber segment can only be located. Finally, the lower right OTDR trace correspond to a case in which the Rayleigh backscatter level in the hollow-core fiber segment is above noise level. In this instance, the OTDR instrument may be used to characterize one or more events in the hollow-core fiber segment, such as excess loss and section loss and attenuation. **If** the user provides Rayleigh backscatter values for the SMF and hollow-core fibers of the optical fiber link, loss at the proximal connector of the hollow-core fiber can be estimated.

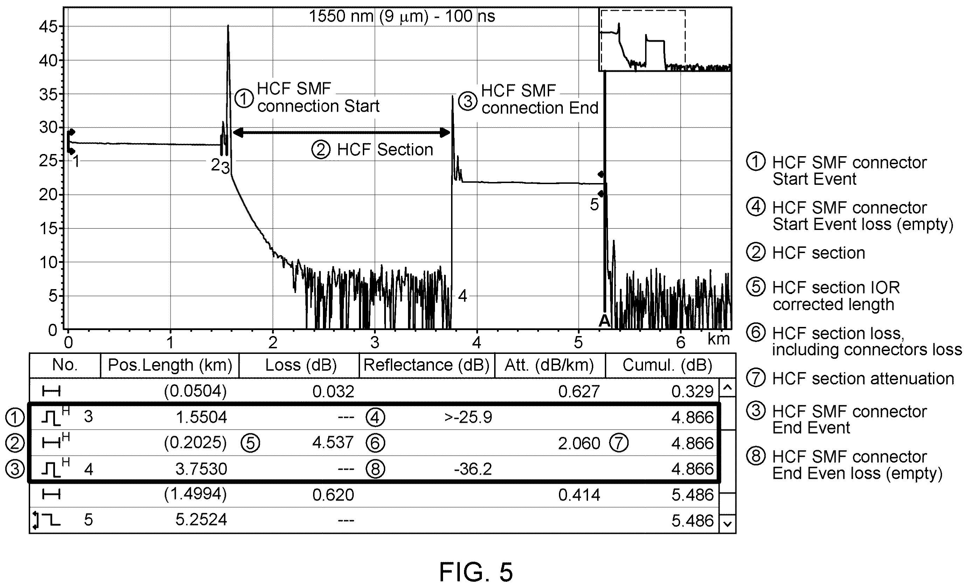

For illustrative purposes, FIG. 5 is an example of results displayed by an OTDR instrument in a case where there is a single-mode fiber Launch and Receive without measurable hollow-core optical fiber Rayleigh backscatter level.

It should be noted that insertion loss measurement for the first splice 130 and the second spice 131 at both extremities of the hollow-core fiber segment and the insertion loss of the hollow-core fiber segment itself cannot be correctly measured unless the Rayleigh backscatter level coefficients of the silica core fiber segment(s) and the hollow-core fiber segments are known within the loss tolerance value.

If the Rayleigh backscatter level coefficient of silica core fiber segment(s) and the hollow-core fiber segments are not known to the required accuracy (better that 0.5 dB for example), then only the total loss associated with the hollow-core fiber segment is known. This total loss is associated with the hollow-core fiber itself as well as all components connecting this fiber to the adjacent silica core fiber segments (for example the first and second splices 130 and 131 and optional connectors 120 and 121 and any fiber segments therebetween), as the insertion losses from all these components cannot be split apart.

One way to have the correct measurement and to measure the Rayleigh backscatter level coefficient of the hollow-core fiber segment itself is to perform an OTDR bidirectional measurement. By combining the measurements performed in both directions, both the first spice 130 and the second splice 131 can be measured and furthermore, the Rayleigh backscatter level value of the hollow-core fiber segment can be provided, assuming Rayleigh backscatter level of the adjoining silica core fiber segments are known to the required precision. Note that the bidirectional measurement may only be useful in cases where the Rayleigh backscatter level of the hollow-core fiber segment is measurable and in the presence of silica core launch and receive fibers 110 and 111. Bidirectional analysis is described in Wei et al., "Extraction of Attenuation and Backscattering Coefficient along Hollow-core Fiber Length using Two-Way Optical Time Domain Backscattering", March 2024, DOI:10.1364/opticaopen.25459957.v1.

As outline previously, the method proposed for locating a hollow-core fiber segment allows the selection of the appropriate parameters and provide the user with the correct identification of each section and events.

In some implementations, the method may further provide a range adjustment of the OTDR trace.

Hollow-core fibers have a lower index of refraction than silica core fibers. For example, the index of refraction of a typical hollow-core optical fiber is close to 1 at 1550 nm, whereas that of a single-mode fiber is about 1.468. The index of refraction is used by OTDRs in order to convert the time of flight within the optical fiber link into distance. Therefore, in another aspect, identifying hollow-core optical fiber sections allows to calculate the range according to the index of refraction of each section. The method may accordingly include steps of assigning an HCF index of refraction value to the hollow-core fiber segment, and adjusting a distance scale associated with the hollow-core fiber segment based on the HCF index of refraction value

Referring back to FIG. 2, the method 200 may include a step of re-scaling 270 the hollow-core fiber segment or segments on an OTDR trace representing the optical fiber link. In other words, the acquired OTDR trace is corrected based on the detected hollow-core optical fiber segments by adjusting a scale of the OTDR trace in accordance with the index of refraction of each detected fiber segment.

**In** some embodiments, in order to obtain the corrected OTDR trace, acquisition points may not be evenly spaced on the distance scale, where the scale is stretched according to the proper index of refraction value as provided by the following equation:

$$x_k = \frac{c \cdot \tau_k}{2 \cdot n_k\left(\lambda\right)}$$

Where:

$K$      is the index of the sample of the OTDR measurement;

$t_k$      is the propagation time of the $k^{th}$ sample;

$x_k$      is the distance to compute from the propagation time $t_k$;

$\lambda$      is the wavelength of the OTDR measurement; and

$n_k(\lambda)$      is the index of refraction at this sample at $\lambda$.

**In** this case, $n_k(\lambda)$ corresponds to the index of refraction of the fiber type that has been detected at this index, either a silica core fiber or a hollow-core fiber. Note that the 2 at the denominator denotes the back-and-forth light path of OTDR pulses within the optical fiber link under test.

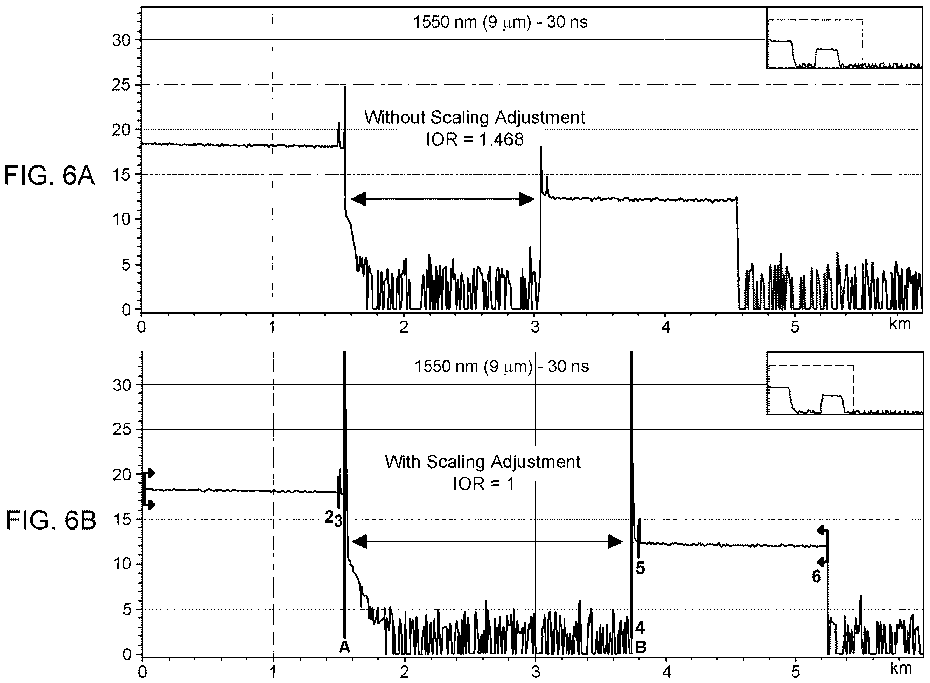

The graph of the corrected OTDR trace may then be displayed. Event locations and sections lengths may also be corrected according to the above equation. Referring to FIGs. 6A and 6B, there is respectively shown an example of an OTDR trace with and without the index of refraction scaling adjustment.

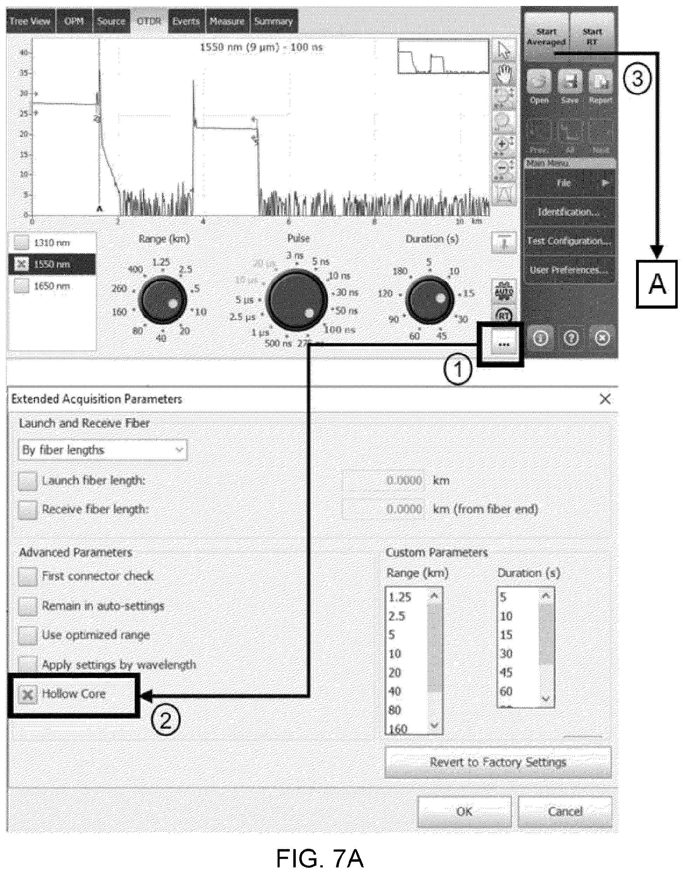

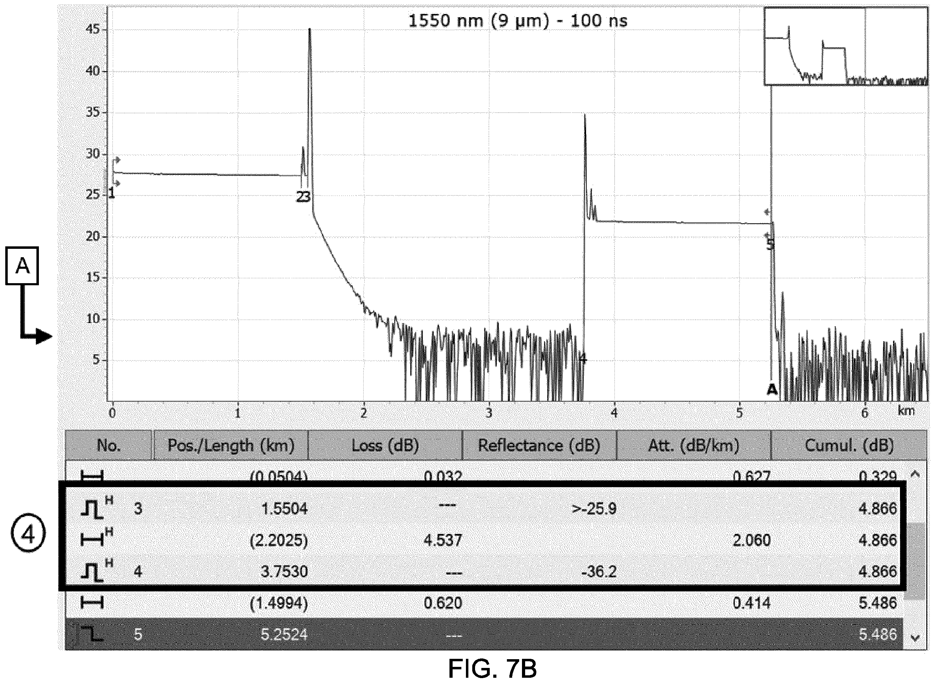

Referring to FIGs. 7A and 7B, there is illustrated an example of a graphical user interface allowing a user to select an "hollow-core optical fiber mode" of operation on the OTDR test instrument, this mode of operation enabling an implementation of the method described herein, including all of the steps of FIG. 2.

Advantageously, the locating of hollow-core fiber segments and events therein may allow the application of the appropriate pass/fail threshold, which can differ between hollow-core optical fiber connections and sections and silica core ones.

Of course, numerous additional modifications could be made to the embodiments described above without departing from the scope of protection as defined in the appended claims.

## Claims

1. A method of locating a hollow-core fiber segment amongst silica core segments along an optical fiber link, comprising:

    - using an OTDR test instrument, sending test signals along the optical fiber link and receiving returning signals therefrom;
    - measuring from said returning signals a Rayleigh backscatter level as a function of distance along the optical fiber link;
    - identifying a position of a proximal extremity of the hollow-core optical fiber segment, comprising locating a discrete drop greater than a drop threshold value in the Rayleigh backscatter level; and
    - identifying a position of a distal extremity of the hollow-core fiber segment, comprising locating one of a discrete step greater than a step threshold value in the Rayleigh backscatter level and end-of-fiber indicator;

    wherein the drop threshold value and the step threshold value are commensurate with a difference between a Rayleigh backscatter level in hollow-core optical fibers and a Rayleigh backscatter level in silica core optical fibers of the type of the silica core fiber segment immediately preceding and immediately following the hollow-core fiber segment, respectively.

2. The method according to claim 1, further comprising determining if the Rayleigh backscatter level between the proximal and distal extremities of the hollow-core fiber segment is measurable.

3. The method according to claim 2, further comprising, if said determining is positive, characterizing one or more event in the hollow-core fiber segment using the OTDR test instrument.

4. The method according to any one of claims 1 to 3, further comprising measuring a Rayleigh backscatter coefficient of the hollow-core fiber segment, comprising performing a bi-directional OTDR measurement.

5. The method according to any one of claims 1 to 4, further comprising re-scaling the Rayleigh backscatter level as a function of distance associated with the hollow-core fiber segment.

6. The method according to any one of claims 1 to 5, further comprising:

    - assigning an HCF index of refraction value to the hollow-core fiber segment; and
    - adjusting a distance scale associated with the hollow-core fiber segment based on said HCF index of refraction value.

7. The method according to claim 6, comprising building an OTDR trace of the optical fiber link using the adjusted distance scale associated with the hollow-core fiber segment.

8. The method according to any one of claims 1 to 7, further comprising locating one or more additional hollow-core optical segments along the optical fiber link.

9. The method according to claim 8, wherein locating one or more additional hollow-core optical segment comprises, for each of said additional hollow-core optical segments:

    - identifying a position of a proximal extremity of the corresponding additional hollow-core optical fiber segment, comprising locating a discrete drop greater than a corresponding drop threshold value in the Rayleigh backscatter level; and
    - identifying a position of a distal extremity of the corresponding additional hollow-core fiber segment, comprising locating one of a discrete step greater than a corresponding step threshold value in the Rayleigh backscatter level and end-of-fiber indicator.

FIG. 1

200

210

Send and receive OTDR signals

220

Measure Rayleigh backscatter level

230

Identify position of proximal extremity of HCF

240

Identify position of distal extremity of HCF

250

Is RBS level in HCF measurable?

260

Characterize event(s) in HCF

270

Re-scale HCF segment on OTDR trace

FIG. 2

FIG. 3

EP 4 718 049 A1

| HCF RBS Measurable? | SMF Launch and Receive | SMF Launch Only |
|---|---|---|
| NO | | |
| YES | | |

FIG. 4

EP 4 718 049 A1

FIG. 5

EP 4 718 049 A1

FIG. 6A

1550 nm (9 µm) - 30 ns

Without Scaling Adjustment
IOR = 1.468

FIG. 6B

1550 nm (9 µm) - 30 ns

With Scaling Adjustment
IOR = 1

FIG. 7A

FIG. 7B

EP 4 718 049 A1

**EUROPEAN SEARCH REPORT**

| | Application Number |
|---|---|
| | EP 25 20 4077 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Xuhao Wei: "Characterisation of Hollow Core Fibres", <br> , <br> 24 September 2024 (2024-09-24), pages 1-162, XP093360480, <br> Retrieved from the Internet: <br> URL:https://eprints.soton.ac.uk/494102/1/T hesis_X_Wei_final_202409_PDFA_version.pdf <br> [retrieved on 2026-01-26] <br> * paragraphs [07.2], [07.3]; figures 7.18, 7.24 * <br> ----- | 1-9 | INV. <br> G01M11/00 |

| TECHNICAL FIELDS SEARCHED (IPC) |
|---|
| G01M <br> H04B |

The present search report has been drawn up for all claims

| Place of search | Date of completion of the search | Examiner |
|---|---|---|
| The Hague | 8 February 2026 | Mihai Vasile |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WEI, XUHAO et al.** *Extraction of Attenuation and Backscattering Coefficient along Hollow Core Fiber Length using Two-Way Optical Time Domain Backscattering*, March 2024

- **WEI et al.** *Extraction of Attenuation and Backscattering Coefficient along Hollow-core Fiber Length using Two-Way Optical Time Domain Backscattering*, March 2024